# FASCICULE DE BREVET EUROPEEN

(11) **EP 2 861 477 B1**
(45) Date de publication et mention de la délivrance du brevet: **06.07.2016**
(21) Numéro de dépôt: 13726223.4
(22) Date de dépôt: 31.05.2013
(51) Int. Cl.: B62B 7/00, B62B 7/14, B62B 9/02, B62B 9/12, B62B 7/12, B62B 7/06

(54) **DISPOSITIF DE SUPPORT DE PLUSIEURS ASSISES POUR UNE VOITURE D'ENFANT**
MEHRFACHSITZRAHMEN FÜR EINEN KINDERWAGEN
MULTIPLE INTERFACE STROLLER ASSEMBLY

(30) Priorité: 18.06.2012 FR 1255699
(43) Date de publication de la demande: 22.04.2015
(73) Titulaire: Dorel France, 49309 Cholet Cedex (FR)
(72) Inventeur: ZWEIDECK, Bruno, F-49300 Cholet (FR); AGENEAU, Laurent, F-85290 Saint-Laurent-sur-Sèvre (FR)
(74) Mandataire: Vidon Brevets & Stratégie
(86) Numéro de dépôt international: PCT/EP2013/061308
(87) Numéro de publication internationale: WO 2013/189720

(56) Documents cités:
- WO-A1-2008/040797
- WO-A1-2010/040644
- DE-U1-202004 012 373
- US-A1- 2009 302 578
- US-A1- 2010 013 281

## Description

### 1. Domaine de l'invention

La présente invention concerne le domaine des voitures d'enfants, ou poussettes, permettant à un adulte de transporter un ou plusieurs enfants.

### 2. Art antérieur

De nombreux modèles de poussettes, ou voitures d'enfants, sont connus. Beaucoup de ces poussettes existantes sont composées d'un châssis pliable, sur lequel une ou plusieurs assises sont assemblées de façon réversible. Un tel assemblage réversible peut par exemple être réalisé par le biais d'un système de solidarisation connu sous le nom "modulo-clip" (marque déposée) et faisant l'objet du brevet n° FR2753158 et FR2753159 au nom de la demanderesse. Ce système de solidarisation permet à l'utilisateur d'assembler au châssis de la poussette une assise de son choix parmi celles qui possèdent des moyens de solidarisation complémentaires de ceux du châssis. Cette assise pourra par exemple être un hamac, une coque de protection pouvant également servir comme siège-auto, une nacelle dans laquelle un bébé peut être placé en position allongée, etc.

Certaines de ces poussettes sont prévues pour le transport d'un enfant, et comprennent en conséquence une seule assise pour l'installation de cet enfant. D'autres poussettes sont spécialement adaptées pour le transport simultané de plusieurs enfants de même âge ou d'âges rapprochés. Ces poussettes sont alors conçues pour comporter au moins deux assises distinctes.

Les parents achètent généralement, pour la naissance de leur premier enfant, une poussette destinée au transport d'un seul enfant. A la naissance d'un deuxième enfant, ils peuvent éprouver le besoin d'une poussette adaptée au transport des deux enfants. Il leur est alors nécessaire d'acheter une seconde poussette, d'un modèle prévu pour recevoir deux enfants.

En plus du coût de cette seconde poussette, les parents doivent alors trouver la place pour le stockage des deux poussettes, quand ils ne les utilisent pas. Cette place doit être relativement importante, dans la mesure où les poussettes permettant le transport de plus d'un enfant sont généralement encombrantes et ne peuvent pas être pliées de façon très compacte. En particulier, ces poussettes ne permettent, en général, qu'un pliage de type "en deux dimensions" dans lesquels les éléments situés à droite de la poussette et les éléments situés à gauche de la poussette restent à la même distance les uns des autres. Elles ne peuvent généralement pas subir un pliage "en trois dimensions", plus compact, dans lequel les éléments de droite de la poussette sont rapprochés des éléments de gauche.

Enfin, dans beaucoup de modèles de poussettes prévus pour plusieurs enfants, il n'est pas possible de choisir le type d'assise que l'on souhaite installer sur la poussette. En conséquence, il n'est pas possible d'adapter cette assise à l'âge de l'enfant et/ou au confort souhaité.

Chacun des documents WO 2008/040797 A1, US 2010/003281 A1 et WO 2010/040644 A1 décrit un dispositif selon le préambule de la revendication 1.

### 3. Objectifs de l'invention

La présente invention a pour objectif de palier à ces inconvénients de l'art antérieur.

En particulier, la présente invention a pour objectif de permettre à des parents de transporter facilement un ou plusieurs enfants, sans que cela engendre pour eux des frais trop importants.

Un autre objectif de l'invention est de permettre à des parents de transporter facilement un ou plusieurs enfants, sans que les poussettes utilisées entrainent un encombrement trop important, quand elles ne sont pas utilisées.

Encore un autre objectif de l'invention est de permettre à des parents de choisir facilement, en fonction de leur besoin, s'ils veulent transporter un ou plusieurs enfants, et de leur permettre d'adapter l'assise dans laquelle sera transporté un enfant, notamment en fonction de l'âge de celui-ci.

### 4. Exposé de l'invention

Ces objectifs, ainsi que d'autres qui apparaîtront plus clairement par la suite, sont atteints à l'aide d'un dispositif de support d'assises de poussette pour une poussette comprenant un châssis pliable comprenant des premiers moyens de solidarisation d'une première assise, le dispositif comprenant des deuxièmes moyens de solidarisation, aptes à coopérer avec lesdits premiers moyens de solidarisation dudit châssis, ledit dispositif comprenant une structure pliable portant au moins deux assises et/ou moyens de solidarisation d'une assise, distribués de part et d'autre desdits deuxièmes moyens de solidarisation. Selon l'invention, ladite structure est pliable simultanément avec ledit châssis. Ainsi, l'invention permet à des parents de transporter au choix un ou plusieurs enfants, dans la poussette qu'ils avaient acheté pour un premier enfant. Cette poussette et son dispositif de support d'assises étant pliables ils ne génèrent qu'un encombrement modéré quand ils ne sont pas utilisés, en tout cas bien inférieur à l'encombrement de deux poussettes.

Cette solution permet un pliage facile et compact de l'ensemble constitué par le châssis et le dispositif de support d'assise. Si le dispositif de support d'assise comporte des moyens de solidarisation amovible d'une assise, cette dernière pourra être également pliée avec le châssis et le dispositif de support d'assise, si elle est conçue à cet effet, ou pourra être retirée avant le pliage, si elle n'est pas pliable avec le châssis.

Selon un mode de réalisation préférentiel de l'invention, ladite structure porte d'une part une seconde assise, pliable avec ladite structure, et d'autre part des troisièmes moyens de solidarisation d'une première assise, prévus pour coopérer avec des moyens de solidarisation complémentaires, montés sur une première assise prévue pour être solidarisée audit châssis.

Le dispositif de support d'assise permet ainsi d'utiliser facilement l'assise initialement prévue pour être installée sur le châssis. En revanche, l'utilisation du dispositif de support d'assise pour le transport de deux enfant ne nécessite pas l'achat d'une assise supplémentaire, une assise étant portée fixement par le châssis.

Avantageusement, ladite structure est conçue de façon que ladite première assise soit surélevé, par rapport à ladite seconde assise.

Cette disposition permet une répartition des masses plus proches de l'axe vertical passant par le centre de gravité de la poussette, et donc évite les déséquilibre. De plus, il permet que l'adulte poussant la poussette puisse avoir une meilleure vision sur les deux enfants transportés.

De façon avantageuse, le dispositif de support d'assise comprend au moins deux bras de support, venant prendre appui sur ledit châssis.

Ces bras de support permettent d'améliorer la stabilité du dispositif de support d'assise sur le châssis.

Préférentiellement, le dispositif de support d'assise comprend deux bras de support prévus pour être solidarisés chacun à une chape montée coulissante sur un brancard arrière dudit châssis.

La liaison des bras e support à ces chapes, qui coulissent lors du pliage du châssis, permet de transmettre facilement le mouvement de pliage du châssis au dispositif de support d'assise, afin d'actionner le pliage de celui-ci.

Selon un mode de réalisation préférentiel, chacun desdits bras support présente une lumière ou un trou borgne apte à coopérer avec une excroissance formée sur ladite chape.

La présente invention concerne également un ensemble doubleur d'assises, comprenant un dispositif tel que décrit ci dessus et une pédale destinée à être solidarisée réversiblement audit châssis de façon que la zone d'appui sur ladite pédale soit déportée vers l'arrière dudit châssis au-delà de l'axe de rotation des roues arrière.

Cette pédale permet de faciliter la manipulation de la poussette, quand elle est alourdie par le poids de plusieurs enfants.

Selon un mode de réalisation possible, ladite pédale présente des moyens de solidarisation aptes à coopérer avec une pédale d'aide au déploiement montée sur ledit châssis.

Il serait également envisageable, selon un autre mode de réalisation, que ladite pédale soit liée fixement à la structure du dispositif de support d'assise.

L'invention concerne également une poussette composée au moins d'un châssis pliable portant des premiers moyens de solidarisation d'une assise, et d'un dispositif de support d'assises comprenant des deuxièmes moyens de solidarisation, aptes à coopérer avec lesdits premiers moyens de solidarisation dudit châssis, dans laquelle ledit dispositif comprend une structure pliable portant et au moins deux assises et/ou moyens de solidarisation d'une assise, distribués de part et d'autre desdits deuxièmes éléments de solidarisation.

### 5. Liste des figures

L'invention sera mieux comprise à la lecture de la description suivante de modes de réalisations, donnée à titre d'exemple illustratif et non limitatif, et accompagnée des dessins parmi lesquels :
- la figure 1 est une vue de côté d'une poussette selon un art antérieur à la présente invention ;
- la figure 2 représente la poussette de la figure 1 dans laquelle l'assise est désolidarisée du châssis ;
- la figure 3 est une vue de côté d'un dispositif de support d'assises selon un mode de réalisation de l'invention, prévu pour s'adapter au châssis de la poussette des figures 1 et 2 ;
- la figure 4 représente le châssis de la poussette des figures 1 et 2 sur lequel est solidarisé le dispositif de support d'assises de la figure 3 ;
- la figure 5 représente l'ensemble représenté à la figure 4, sur lequel est assemblé l'assise de la poussette des figures 1 et 2 ;
- la figure 6 représente l'ensemble représenté à la figure 4 dans une position pliée ;
- les figures 7 et 8 sont des vues de dessus d'un dispositif de support d'assises selon une variante de l'invention, dans deux positions distinctes ;
- les figures 9 et 10 sont des vues de côté du dispositif de support d'assises des figures 7 et 8, dans deux positions distinctes ;
- la figure 11 représente le châssis de poussette de la figure 2 équipé du dispositif de support d'assises des figures 7 à 10 ;
- la figure 12 représente le châssis de poussette de la figure 2 équipé du dispositif de support d'assises des figures 7 à 10 et d'une pédale d'aide au franchissement.

### 6. Description détaillée d'un mode de réalisation de l'invention

### 6.1 Poussettes composées d'un châssis et d'une assise amovible.

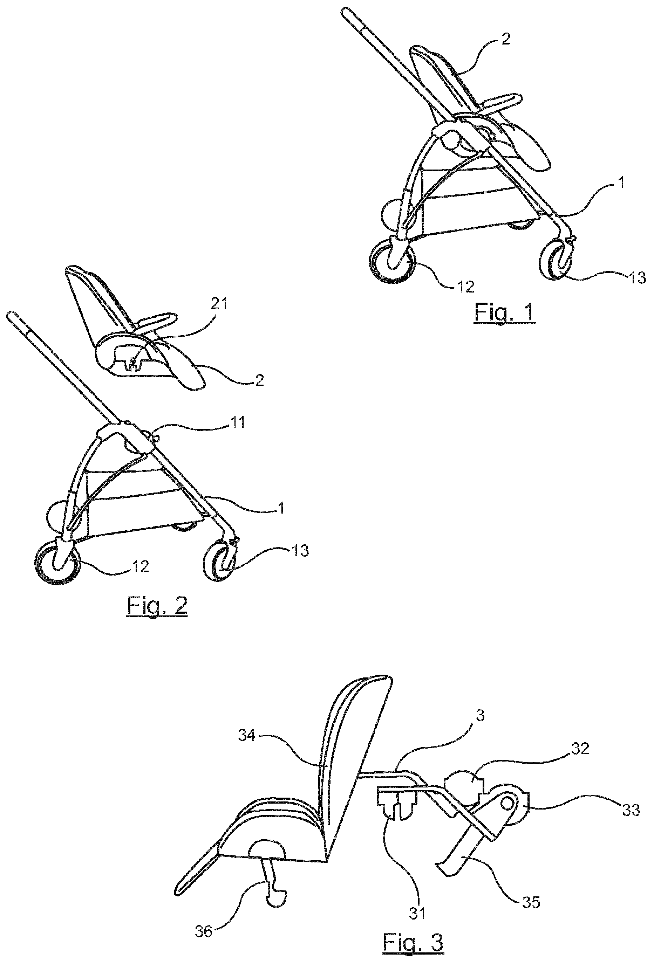

La figure 1 représente en vue de côté une poussette de l'art antérieur, qui comporte un châssis 1 et une assise 2. Comme le montre la figure 2, l'assise 2 peut être désolidarisée du châssis 1. Cette assise 2 est en effet solidarisée au châssis 1 de façon réversible par un système de solidarisation composé de moyens de solidarisation mâles 21, portés par l'assise 2, et de moyens de solidarisation femelle 11, portés par le châssis 1. Il est ainsi possible d'assembler sur le châssis 1 une assise choisie parmi une pluralité d'assise différentes, adaptées à différents âges de l'enfant ou permettant des positions différentes : un siège pliable parfois appelé « hamac », comme représenté sur les figures 1 et 2, une coque rigide pouvant également servir de siège auto, une nacelle permettant de transporter un bébé en position allongée, etc. Bien entendu, d'autres types de solidarisation réversible entre le châssis et l'assise de la poussette pourraient être mis en oeuvre par l'homme du métier, sans difficultés.

Le châssis 1 de la poussette est pliable. D'une part, les brancard arrières portant les roues arrières 12 peuvent se rapprocher des brancards avant portant les roues avant 13. D'autre part, les éléments de droite de la poussette peuvent également se rapprocher des éléments de gauche, afin d'obtenir un pliage en trois dimensions, particulièrement compact, du châssis 1. Si le châssis 1 est équipé d'une assise pliable, cette assise peut être pliée en même temps que le châssis, sans qu'il soit nécessaire de la désolidariser du châssis. Si au contraire le châssis 1 est équipé d'une assise qui n'est pas pliable, comme par exemple une coque rigide, cette assise doit être désolidarisée du châssis pour permettre le pliage de celui-ci.

### 6.2 Dispositif de support d'assises

Selon l'invention, un dispositif de support d'assises, par exemple celui représenté par la figure 3, permet de solidariser plusieurs assises au châssis 1, pour transporter plusieurs enfants avec la même poussette.

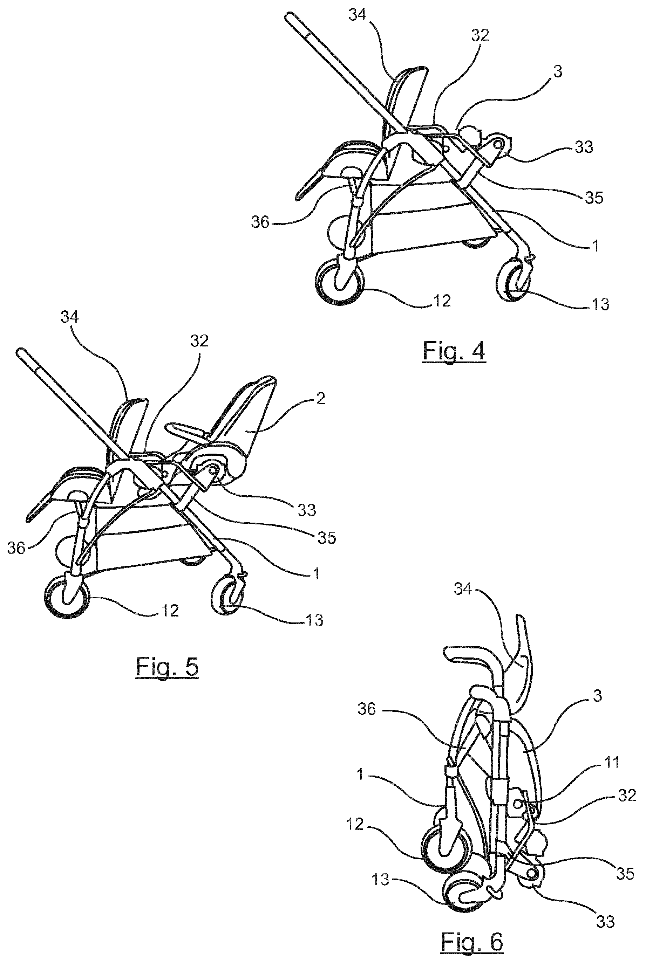

Ce dispositif de support d'assises 3 comporte un moyen de solidarisation mâle 31, semblable au moyen de solidarisation mâle 21 de l'assise 2, pouvant coopérer avec les moyens de solidarisation femelle 11 du châssis 1 pour solidariser de façon réversible le dispositif de support d'assises 3 au châssis 1. La figure 4 illustre ce dispositif de support d'assises 3 solidarisé au châssis 1.

Le dispositif de support d'assises 3 comporte également une structure pliable 32 s'étendant à l'avant et à l'arrière du moyen de solidarisation 31. Cette structure est conçue pour que sa partie de droite puisse être rapprochée de sa partie de gauche, lors du pliage du dispositif de support d'assises 3. A l'avant de ce moyen de solidarisation 31, la structure 32 porte un moyen de solidarisation femelle 33, semblable au moyen de solidarisation femelle 11 du châssis 1. A l'arrière du moyen de solidarisation 31, la structure 32 porte une assise 34, permettant d'installer un enfant. Dans le mode de réalisation présenté, cette assise est tournée vers l'arrière, afin que l'enfant soit assis en face de l'adulte poussant la poussette.

### 6.3 Utilisation de l'assise amovible

Comme le montre la figure 5, l'assise 2, prévue pour être assemblée de façon réversible au châssis 1, peut également être assemblée de façon réversible au dispositif de support d'assises 3, grâce à ses moyens de solidarisation mâle 21 qui peuvent coopérer avec les moyens de solidarisation femelle 33 du dispositif de support d'assises 3.

La poussette ainsi constituée par le châssis 1, le dispositif de support d'assises 3 et l'assise 2 permet ainsi de transporter deux enfants simultanément, l'un dans l'assise 2 et l'autre dans l'assise 34 du dispositif de support d'assises 3.

Le même châssis 1 de poussette, et la même assise 2, peuvent donc être utilisés à la fois pour le transport d'un seul enfant ou, en association avec le dispositif de support d'assises 3, pour le transport de deux enfants. En conséquence, des parents ayant besoin de transporter parfois un enfant et parfois deux enfants peuvent le faire avec un seul et même châssis de poussette 1, ce qui réduit considérablement l'encombrement généré par les poussettes.

De plus, les parents possédant une poussette pour un enfant n'ont à supporter qu'un coût relativement peu élevé pour permettre à cette poussette de transporter deux enfants, en y installant le dispositif de support d'assises 3.

Enfin, les éléments de solidarisation femelle 33 du dispositif de support d'assises 3 sont avantageusement compatibles avec différents types d'assises équipés d'éléments de solidarisation mâle correspondants. Les parents peuvent ainsi choisir d'installer l'un des enfants dans une assise adaptée à son âge ou au niveau de confort souhaité, par exemple un hamac, ou une coque rigide. Dans le mode de réalisation présenté, les moyens de solidarisation amovibles d'assises sont du type connu sous le nom "modulo-clip" (marque déposée) et faisant l'objet du brevet n° FR2753158 et FR2753159 au nom de la demanderesse, qui utilisent des éléments de solidarisation males pouvant coopérer avec des éléments de solidarisation femelle. Il est cependant possible de mettre en oeuvre l'invention avec tout les types de moyens de solidarisation amovible d'assise de poussette qui sont connus de l'homme du métier.

Dans le mode de réalisation présenté, le dispositif de support d'assise porte donc une assise qui lui est lié fixement et unes moyens de solidarisation amovible d'une seconde assise. Bien évidemment, l'homme du métier pourra sans difficultés mettre en oeuvre de la même façon un dispositif de support d'assise portant deux assises liées fixement, ou deux ensembles de moyens de solidarisation permettant de fixer amoviblement deux assises. Il est également possible de prévoir plus de deux assises, fixes ou amovibles, sur un tel dispositif de support d'assise.

### 6.4 Pliage de la poussette comprenant le dispositif de support d'assises

De façon avantageuse, le dispositif de support d'assises 3 est pliable de telle sorte que son côté droit peut se rapprocher de son côté gauche. Ainsi, l'utilisateur peut replier le châssis 1 sans retirer le dispositif de support d'assises 3 qui y est solidarisé. Seule l'assise amovible solidarisée aux éléments de solidarisation femelle 33 du dispositif de support d'assises 3 doit alors être retiré préalablement au pliage du châssis, si elle n'est pas conçue pour être pliée en même temps que le châssis. La figure 6 représente ainsi le châssis 1 en position pliée, sur lequel est solidarisé le dispositif de support d'assises 3, lui-même en position pliée. Bien entendu, il est également possible, si une assise amovible est conçue pour être pliable en même temps que le dispositif de support d'assise, de plier en même temps cette assise, le dispositif de support d'assise et le châssis.

### 6.5 Éléments de solidarisation, du dispositif de support d'assises au châssis

Pour permettre une solidarisation efficace du dispositif de support d'assises 3 au châssis 1, la structure 32 porte, à l'avant de l'élément de solidarisation 31, des bras de support avant 35, et, à l'arrière de l'élément de solidarisation 31, des bras de support arrière 36. Une extrémité libre des bras de support avant 35 peut prendre appui et se fixer sur les brancards avant du châssis, portant les roues avant. De même, une extrémité libre des bras de support arrière 36 peut prendre appui et se fixer sur les brancards arrière du châssis, portant les roues arrière.

Ainsi, le dispositif de support d'assises 3 prend appui de façon stable sur le châssis 1 et ne risque pas de pivoter par rapport au châssis 1, quand un enfant y est installé.

### 6.6 Variante du dispositif de support d'assise

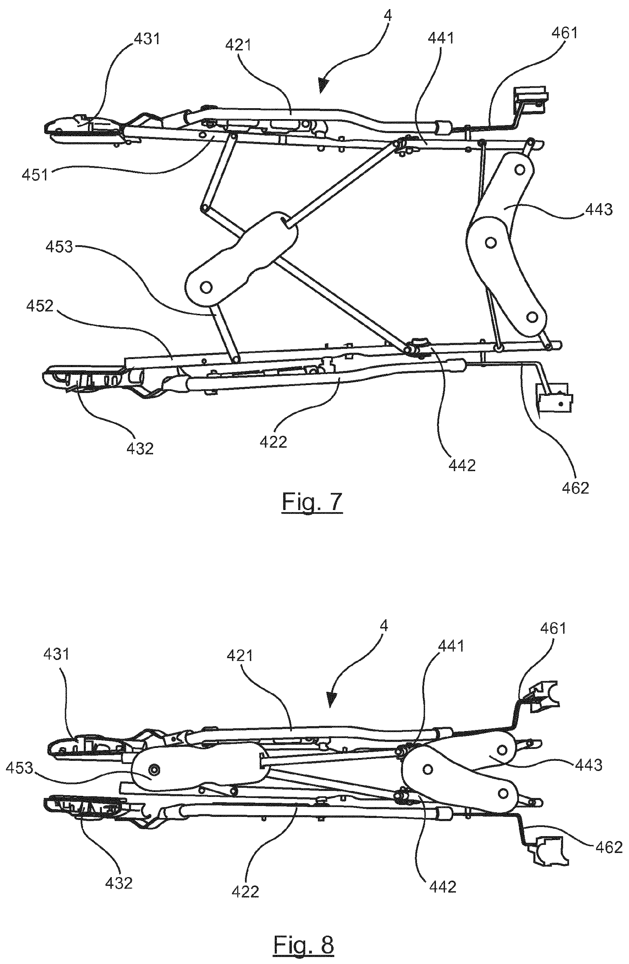

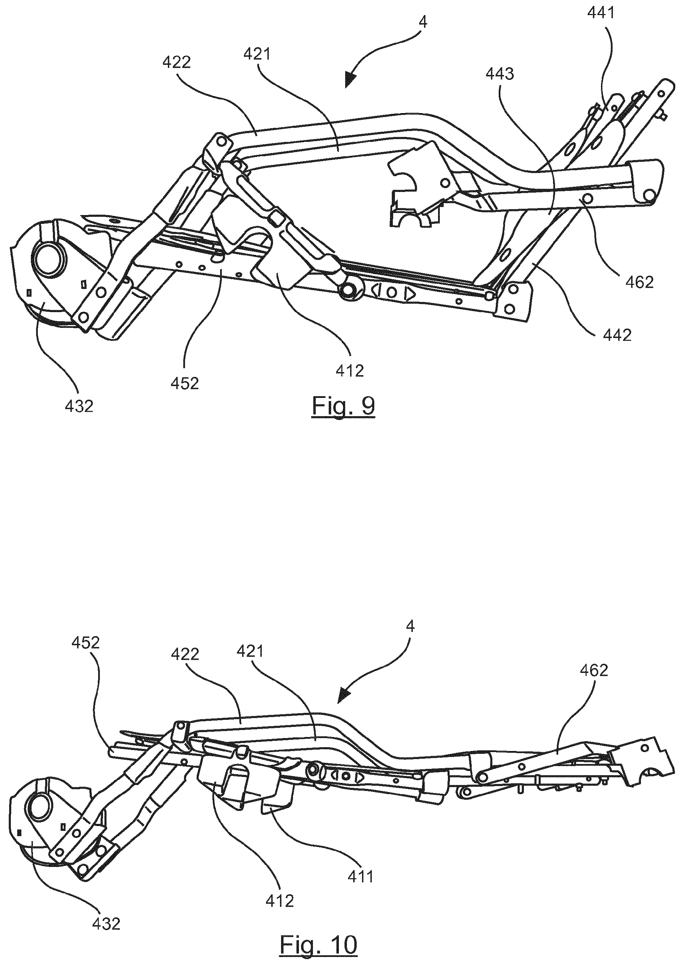

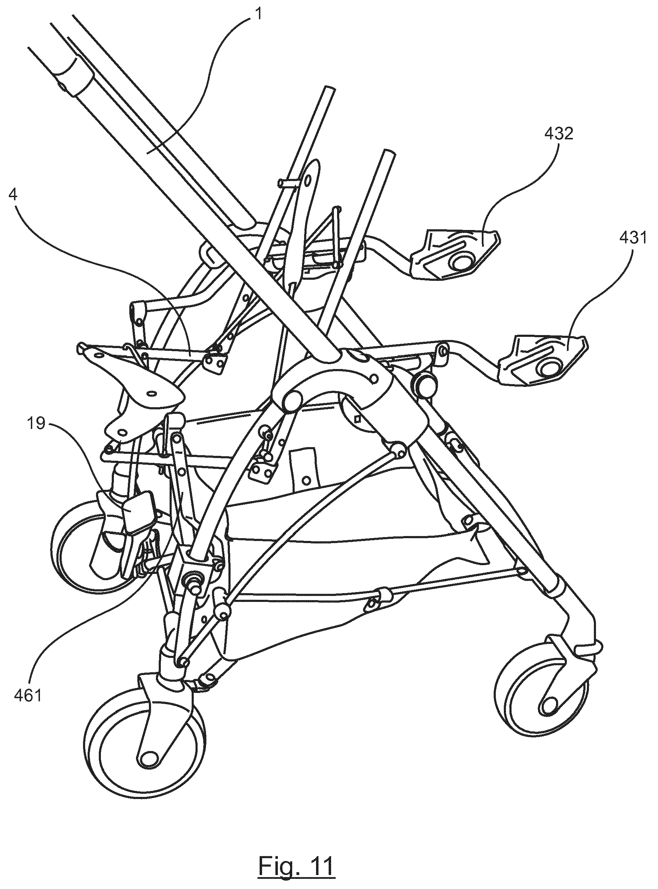

Les figures 7 à 10 montrent un dispositif de support d'assises 4 selon une variante de l'invention. Ce dispositif de support d'assises 4, comme le dispositif de support d'assises 3 présenté précédemment, comporte sur son côté droit et sur son coté gauche des moyens de solidarisation mâles, respectivement 411 et 412, semblables aux moyens de solidarisation mâles 21 de l'assise 2, et pouvant coopérer avec les moyens de solidarisation femelles 11 du châssis 1 pour solidariser de façon réversible le dispositif de support d'assises 4 au châssis 1. La figure 11 illustre ce dispositif de support d'assises 4 solidarisé au châssis 1.

Le dispositif de support d'assises 4 comporte également une structure, comprenant notamment un longeron droit 421 et un longeron gauche 422, s'étendant à l'avant et à l'arrière des moyen de solidarisation male 411 et 412. Cette structure est pliable de telle sorte que son longeron droit 421 puisse être rapprochée de son longeron gauche 422, comme le représente la figure 8. A l'avant des moyens de solidarisation male 411 et 412, les longerons droit 421 et gauche 422 portent chacun un moyen de solidarisation femelle, respectivement 431 et 432, qui sont semblables aux moyens de solidarisation femelles 11 du châssis 1. A l'arrière des moyens de solidarisation male 411 et 412, la structure porte une assise fixe permettant d'installer un enfant.

Seule l'ossature de cette assise fixe est représentée sur les figures 7 à 12. Bien évidemment un habillage textile est mis en place sur cette ossature pour lui permettre de recevoir un enfant. Cette ossature comprend une partie d'assise, composée d'un longeron droit d'assise 441 et d'un longeron gauche d'assise 442 reliés l'un à l'autre par des croisillons d'assise 443. Ces croisillons d'assise 443 sont composés de biellettes et sont pliables de telle sorte que le longeron droit d'assise 441 et le longeron gauche d'assise 442 puissent être rapprochés l'un de l'autre comme le montre la figure 8. Cette ossature comprend également un dossier, composé d'un montant droit de dossier 451 et d'un montant gauche de dossier 452 reliés l'un à l'autre par des croisillons de dossier 453. Ces croisillons de dossier 453 sont composés de biellettes et sont pliables de telle sorte que le montant droit de dossier 451 et le montant gauche de dossier 452 puissent être rapprochés l'un de l'autre comme le montre la figure 8.

D'autre type d'assise fixe peuvent bien entendu être mis en oeuvre sur le dispositif de support d'assise selon l'invention. Ainsi, il est possible que cette assise fixe soit réalisée en matière plastique telle que de la mousse EVA (éthylène vinyle acétate). Ce matériau présente la rigidité nécessaire pour fournir une assise, et peut être plié lors du pliage du dispositif de support d'assise, notamment si des plis ou des charnières souples y ont été prévus.

Enfin, le dispositif de support d'assises 5 comporte également des bras de support arrière 461 et 462 articulés respectivement sur les longerons droit 421 et gauche 422 de la structure, pour permettre une solidarisation efficace du dispositif de support d'assises 4 au châssis 1. L'extrémité libre de chacun de ces bras de support arrière, respectivement 461 et 462, présente des moyens de solidarisation avec une chape coulissante entourant un brancard arrière, respectivement droit et gauche, de la poussette, comme le montre la figure 11. Avantageusement, pour permettre cette solidarisation, l'extrémité libre de chacun des bras de support arrière 461 et 462 présente une lumière ou un trou borgne apte à coopérer avec une excroissance formée sur ladite chape.

Comme le montrent les figures 7 à 10, le dispositif de support d'assises 4 peut se plier pour prendre plusieurs positions, et notamment des positions dans lesquelles les parties de droite sont rapprochées des parties de gauche, comme le montre la figure 8. Ainsi, lors du pliage du châssis 1 de la poussette, le dispositif de support d'assises 4 qui y est assemblé peut se plier également, et prendre une position qui permet de minimiser l'encombrement de la poussette.

### 6.6 Pédale déportée adaptable au châssis de la poussette

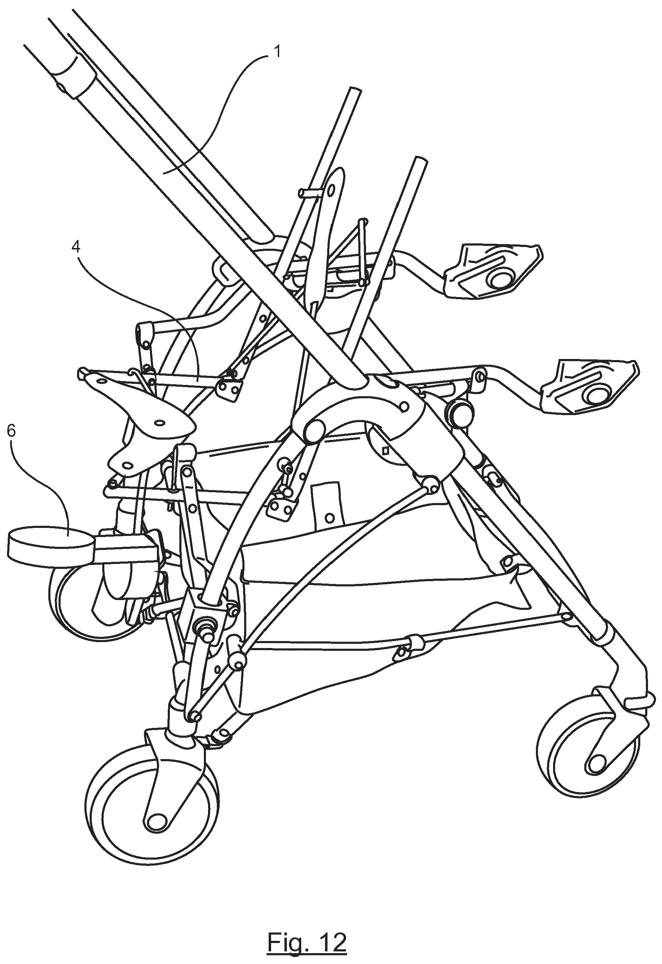

Une poussette transportant plusieurs enfants est relativement lourde et difficile à manoeuvrer. En particulier, il est difficile de soulever les roues avant d'une telle poussette, par exemple pour lui permettre de monter un trottoir. Pour faciliter cette manoeuvre, il a été prévu, selon un mode de réalisation avantageux de l'invention représenté par la figure 12, de fournir une pédale d'aide au franchissement 6 pouvant être solidarisée réversiblement au châssis 1, à proximité des brancards arrière, et s'étendant sensiblement horizontalement à l'arrière des brancards arrières.

A titre d'exemple, dans le mode de réalisation représenté par la figure 12, cette pédale d'aide au franchissement 6 est fixée par emboitement sur une pédale de déploiement 19 prévue sur le châssis 1. L'utilisateur peut, en appuyant sur cette pédale d'aide au franchissement 6 dont la zone d'appui est déportée vers l'arrière du châssis, au-delà de l'axe de rotation des roues arrières, agir sur le châssis 1 en le faisant pivoter vers l'arrière, autour de ses roues arrières. Il lui est donc beaucoup plus facile de soulever les roues avant de la poussette.

## Revendications

1. Dispositif de support d'assises (3) de poussette, pour une poussette comprenant un châssis (1) pliable comprenant des premiers moyens de solidarisation (11) d'une première assise (2), le dispositif (3) comprenant des deuxièmes moyens de solidarisation (31), aptes à coopérer avec lesdits premiers moyens de solidarisation (11) dudit châssis (1), ledit dispositif (3) comprenant une structure pliable (32) portant au moins deux assises (2, 34) et/ou moyens de solidarisation (33) d'une assise (2), distribués de part et d'autre desdits deuxièmes moyens de solidarisation (31), ledit dispositif étant **caractérisé en ce que** ladite structure (32) est pliable simultanément avec ledit châssis (1).

2. Dispositif selon la revendication 1, **caractérisé en ce que** ladite structure (32) porte d'une part une seconde assise (34), pliable avec ladite structure (32), et d'autre part des troisièmes moyens de solidarisation (33) d'une première assise (2), prévus pour coopérer avec des moyens de solidarisation complémentaires, montés sur une première assise (2) prévue pour être solidarisée audit châssis (1).

3. Dispositif selon la revendication 2, **caractérisé en ce que** ladite structure (32) est conçue de façon que ladite première assise (2) soit surélevée, par rapport à ladite seconde assise (34).

4. Dispositif selon l'une quelconque des revendications 1 à 3, **caractérisé en ce qu'**il comprend au moins deux bras de support (35, 36), venant prendre appui sur ledit châssis (1).

5. Dispositif selon la revendication 4, **caractérisé en ce qu'**il comprend deux bras de support ( 36) prévus pour être solidarisés chacun à une chape montée coulissante sur un brancard arrière dudit châssis.

6. Dispositif selon la revendication 5, **caractérisé en ce que** chacun desdits bras support ( 36) présente une lumière ou un trou borgne apte à coopérer avec une excroissance formée sur ladite chape.

7. Ensemble doubleur d'assises, **caractérisé en ce qu'**il comprend un dispositif (3) selon l'une quelconque des revendications 1 à 6 et une pédale (6) destinée à être solidarisée réversiblement audit châssis (1) de façon que la zone d'appui sur ladite pédale (6) soit déportée vers l'arrière dudit (1) châssis au-delà de l'axe de rotation des roues arrière.

8. Ensemble selon la revendication 7, **caractérisé en ce que** ladite pédale (6) présente des moyens de solidarisation aptes à coopérer avec une pédale (19) d'aide au déploiement montée sur ledit châssis (1).

9. Poussette composée au moins d'un châssis (1) pliable portant des premiers moyens de solidarisation (11) d'une assise (2), et d'un dispositif de support d'assises (3) selon la revendication 1.

## Patentansprüche

1. Vorrichtung zum Halten von Sitzen (3) von Kinderwägen, für einen Kinderwagen mit einem zusammenklappbaren Gestell (1), der erste Mittel zum Befestigen (11) eines ersten Sitzes (2) aufweist, wobei die Vorrichtung (3) zweite Mittel zum Befestigen (31) aufweist, die geeignet sind, mit den ersten Mitteln zum Befestigen (11) des Gestells (1) zusammenzuwirken, wobei die Vorrichtung (3) eine zusammenklappbare Struktur (32) aufweist, die wenigstens zwei Sitze (2, 34) und/oder Mittel zum Befestigen (33) eines Sitzes (2) trägt, die über beide Seiten der zweiten Mittel zum Befestigen (31) verteilt sind, wobei die Vorrichtung **dadurch gekennzeichnet ist, dass** die Struktur (32) gleichzeitig mit dem Gestell (1) zusammenklappbar ist.

2. Vorrichtung nach Anspruch 1, **dadurch gekennzeichnet, dass** die Struktur (32) auf einer Seite einen zweiten Sitz (34), der mit der Struktur (32) zusammenklappbar ist, und auf der anderen Seite dritte Mittel zum Befestigen (33) eines ersten Sitzes (2) trägt, die dafür vorgesehen sind, mit komplementären Mitteln zum Befestigen zusammenzuwirken, die auf einem ersten Sitz (2) montiert sind und dafür vorgesehen sind, an dem Gestell (1) befestigt zu werden.

3. Vorrichtung nach Anspruch 2, **dadurch gekennzeichnet, dass** die Struktur (32) derart ausgestaltet ist, dass der erste Sitz (2) gegenüber dem zweiten Sitz (34) erhöht ist.

4. Vorrichtung nach einem der Ansprüche 1 bis 3, **dadurch gekennzeichnet, dass** sie wenigstens zwei Haltearme (35, 36) aufweist, die zur Auflage auf dem Gestell (1)kommen.

5. Vorrichtung nach Anspruch 4, **dadurch gekennzeichnet, dass** sie zwei Haltearme (36) aufweist, die dafür vorgesehen sind, jeweils an einer gleitbar auf einem hinteren Träger des Gestells montierten Kappe befestigt zu werden.

6. Vorrichtung nach Anspruch 5, **dadurch gekennzeichnet, dass** jeder der Haltearme (36) ein Licht oder ein Sackloch zeigt, dass geeignet ist, mit einem Vorsprung zusammenzuwirken, der auf der Kappe gebildet ist.

7. Doppelsitzanordnung, **dadurch gekennzeichnet, dass** sie eine Vorrichtung (3) nach einem der Ansprüche 1 bis 6 und ein Pedal (6) aufweist, das dazu vorgesehen ist, lösbar an dem Gestell (1)derart befestigt zu werden, dass die Auflagezone auf dem Pedal (6) in Richtung des Hinteren des Gestells (1) über die Rotationsachse der hinteren Räder hinaus verschoben ist.

8. Anordnung nach Anspruch 7, **dadurch gekennzeichnet, dass** das Pedal (6) Mittel zum Befestigen zeigt, die geeignet sind, mit einem Pedal (19) zum Unterstützen des Entfaltens zusammenzuwirken, das auf dem Gestell (1) montiert ist.

9. Kinderwagen, der aus wenigstens einem zusammenklappbaren Gestell (1), das erste Mittel zum Befestigen (11) eines Sitzes (2) trägt, und einer Vorrichtung zum Halten von Sitzen (3) nach Anspruch 1 zusammengesetzt ist.

## Claims

1. Pushchair seat support device (3), for a pushchair comprising a collapsible frame (1) comprising first securing means (11) for securing a first seat (2), the device (3) comprising second securing means (31), suitable for engaging with said first securing means (11) of said frame (1), said device (3) comprises a collapsible structure (32) carrying at least two seats (2, 34) and/or means (33) for securing a seat (2), distributed on either side of said second securing means (31), said device being **characterised in that** said structure (32) is collapsible simultaneously with said frame (1).

2. Device according to claim 1, **characterised in that** said structure (32) carries, on the one hand, a second seat (34), collapsible with said structure (32), and, on the other hand, third means (33) for securing a first seat (2), envisaged to engage with complementary securing means, mounted on a first seat (2) envisaged to be secured to said frame (1).

3. Device according to claim 2, **characterised in that** said structure (32) is designed such that said first seat (2) is raised, in relation to said second seat (34).

4. Device according to any of claims 1 to 3, **characterised in that** it comprises at least two support arms (35, 36), bearing on said frame (1).

5. Device according to claim 4, **characterised in that** it comprises two support arms (36) envisaged to be each secured to a cap slidably mounted on a rear shaft of said frame.

6. Device according to claim 5, **characterised in that** each of said support arms (36) has a slot or a blind hole suitable for engaging with a protuberance formed on said cap.

7. Assembly for doubling seats, **characterised in that** it comprises a device (3) according to any of claims 1 to 6 and a pedal (6) intended to be reversibly secured to said frame (1) such that the bearing area on said pedal (6) is offset to the rear (1) of said frame beyond the axis of rotation of the rear wheels.

8. Assembly according to claim 7, **characterised in that** said pedal (6) has securing means suitable for engaging with a deployment assistance pedal (19) mounted on said frame (1).

9. Pushchair consisting of at least one collapsible frame (1) carrying first securing means (11) for securing a seat (2), and a seat support device (3) according to claim 1.
